# EUROPEAN PATENT APPLICATION

(11) **EP 3 070 769 A1**
(43) Date of publication of application: **21.09.2016**
(21) Application number: 16158444.6
(22) Date of filing: 03.03.2016
(51) Int. Cl.: H01M 4/36, H01M 4/485, H01M 4/62, H01M 10/052, H01M 4/02

(54) **ELECTRODE, NONAQUEOUS ELECTROLYTE BATTERY, AND BATTERY PACK**

(30) Priority: 19.03.2015 JP 2015056855
(71) Applicant: Kabushiki Kaisha Toshiba, Tokyo 105-8001 (JP)
(72) Inventor: Yoshida, Yorikazu, Tokyo, 105-8001 (JP); Harada, Yasuhiro, Tokyo, 105-8001 (JP); Ise, Kazuki, Tokyo, 105-8001 (JP); Yoshima, Kazuomi, Tokyo, 105-8001 (JP); Takami, Norio, Tokyo, 105-8001 (JP)
(74) Representative: Hoffmann Eitle

(57) **Abstract**

In general, according to one embodiment, there is provided an electrode (3). The electrode (3) includes a current collector (3a), a first electrode mixture layer (3b₁) formed on the current collector (3a), and a second electrode mixture layer (3b₂) formed on the first electrode mixture layer (3b₁). The first electrode mixture layer (3b₁) contains a niobium-titanium composite oxide that has a monoclinic crystal structure. The second electrode mixture layer (3b₂) contains a lithium titanate that has a spinel-type crystal structure.

## Description

### FIELD

Embodiments described herein relate generally to an electrode, a nonaqueous electrolyte battery, and a battery pack.

### BACKGROUND

Recently, a nonaqueous electrolyte battery such as a lithium-ion secondary battery has been developed as a battery having a high energy density. The nonaqueous electrolyte battery is expected to be used as a power source for vehicles such as hybrid vehicles or electric cars. Further, the nonaqueous electrolyte battery is also expected to serve as an uninterruptible power supply for a base station of mobile phone. Therefore, the nonaqueous electrolyte battery is desired to have other performances such as rapid charge-and-discharge performances and long-term reliability. A nonaqueous electrolyte battery capable of rapid charge-and-discharge has an advantage of significantly short charging time. Moreover, the nonaqueous electrolyte battery capable of rapid charge-and-discharge can improve power performance of a hybrid vehicle, and further can efficiently recover regenerative energy of the power.

In order to enable rapid charge-and-discharge, it is necessary for electrons and lithium ions to be able to migrate rapidly between the positive electrode and the negative electrode. When a battery using a carbon based material in the negative electrode undergoes repeated rapid charge-and-discharge, dendrite precipitation of metal lithium occurs on the electrode. Dendrites cause internal short circuits, which can lead to heat generation and fires.

In light of this, a battery using a metal composite oxide as a negative electrode active material in place of a carbonaceous material has been developed. Particularly, in a battery using titanium oxide as the negative electrode active material, rapid charge-and-discharge can be performed stably. Such a battery also has a longer life than those using a carbonaceous material.

However, titanium oxide has a higher (nobler) potential relative to metal lithium than that of the carbonaceous material. Further, titanium oxide has a lower capacity per weight. Thus, a battery formed by using the titanium oxide has a problem such that the energy density is low.

For example, the potential of the electrode using titanium oxide is about 1.5 V based on metal lithium and is higher (i.e., nobler) than that of the negative electrode using the carbonaceous material. The potential of titanium oxide is due to the redox reaction between Ti³⁺ and Ti⁴⁺ when lithium is electrochemically inserted and extracted. Therefore, it is limited electrochemically. Further, there is the fact that rapid charge-and-discharge of lithium ions can be stably performed at an electrode potential as high as about 1.5 V. Therefore, it is substantially difficult to drop the potential of the electrode to improve energy density.

As to the capacity per unit weight, the theoretical capacity of a lithium-titanium composite oxide such as Li₄Ti₅O₁₂ is about 175 mAh/g. On the other hand, the theoretical capacity of a general graphite-based electrode material is 372 mAh/g. Therefore, the capacity density of titanium oxide is significantly lower than that of the carbon-based negative electrode. This is due to a reduction in substantial capacity because there are only a small number of lithium-insertion sites in the crystal structure of titanium oxide and lithium tends to be stabilized in the structure.

In view of such circumstances, a new electrode material containing Ti and Nb has been examined. In particular, a composite oxide represented by TiNb₂O₇ has a high theoretical capacity exceeding 300 mAh/g. However, such a material is problematic in exhibiting poor ion conductivity, electron conductivity and cycle characteristics, and exhibiting inferior large-current characteristics.

### BRIEF DESCRIPTION OF THE DRAWINGS

FIG. 1 is a schematic view showing a crystal structure of a niobium-titanium composite oxide Nb₂TiO₇;
FIG. 2 is a schematic view showing the crystal structure of FIG. 1 from another direction;
FIG. 3 is a sectional SEM image of an example of an electrode according to a first embodiment;
FIG. 4 is a sectional SEM image of an electrode mixture layer in an electrode according to a reference example;
FIG. 5 is a sectional SEM image of a first electrode mixture layer in an example of the electrode according to a first embodiment;
FIG. 6 is a sectional SEM image of a second electrode mixture layer in an example of the electrode according to a first embodiment;
FIG. 7 is a schematic sectional view of an example of a nonaqueous electrolyte battery according to a second embodiment;
FIG. 8 is an enlarged sectional view of an A portion of FIG. 7;
FIG. 9 is a partially cutaway perspective view schematically showing another example of a nonaqueous electrolyte battery according to a second embodiment;
FIG. 10 is an enlarged sectional view of a B portion of FIG. 9;
FIG. 11 is an exploded perspective view of an example of a battery pack according to a third embodiment;
FIG. 12 is a block diagram showing an electric circuit of the battery pack of FIG. 11;
FIG. 13 is a diagram showing battery characteristics of beaker cells of Example 1, Comparative Example 1 and Comparative Example 2; and
FIG. 14 is a sectional SEM image of an electrode of Example 2.

### DETAILED DESCRIPTION

In general, according to one embodiment, there is provided an electrode. The electrode includes a current collector, a first electrode mixture layer formed on the current collector, and a second electrode mixture layer formed on the first electrode mixture layer. The first electrode mixture layer contains a niobium-titanium composite oxide that has a monoclinic crystal structure. The second electrode mixture layer contains a lithium titanate that has a spinel-type crystal structure.

The embodiments will be explained below with reference to the drawings. In this case, the structures common to all embodiments are represented by the same symbols and duplicated explanations will be omitted. Also, each drawing is a typical view for explaining the embodiments and for promoting the understanding of the embodiments. Though there are parts different from an actual device in shape, dimension and ratio, these structural designs may be properly changed taking the following explanations and known technologies into consideration.

### (First Embodiment)

According to a first embodiment, there is provided an electrode. The electrode includes a current collector, a first electrode mixture layer formed on the current collector, and a second electrode mixture layer formed on the first electrode mixture layer. The first electrode mixture layer contains a niobium-titanium composite oxide that has a monoclinic crystal structure. The second electrode mixture layer contains a lithium titanate that has a spinel-type crystal structure.

First, an electrode according to the first embodiment includes a first electrode mixture layer containing a monoclinic niobium-titanium composite oxide, and can thereby achieve a nonaqueous electrolyte battery capable of exhibiting a high capacity. The reason for this will be described below.

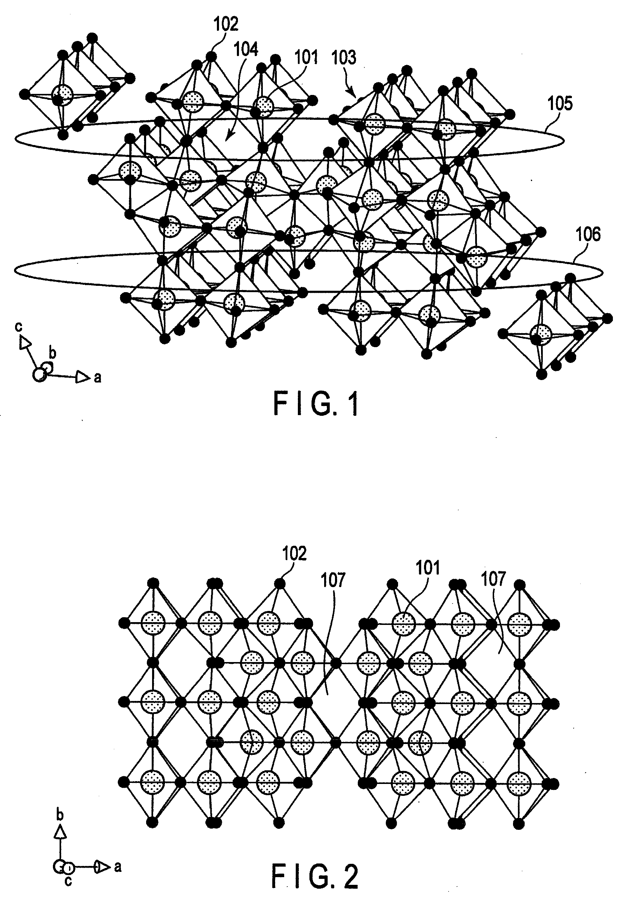

First, an example of a crystal structure of the monoclinic niobium-titanium composite oxide will be described with reference to FIGS. 1 and 2.

FIG. 1 is a schematic view showing a crystal structure of a niobium-titanium composite oxide (Nb₂TiO₇) which is an example of the monoclinic niobium-titanium composite oxide. FIG. 2 is a schematic view showing the crystal structure of FIG. 1 from another direction.

As shown in FIG. 1, in the crystal structure of the monoclinic niobium-titanium composite oxide Nb₂TiO₇, metal ions 101 and oxide ions 102 constitute skeleton structure portions 103. It should be noted that for the metal ions 101, a Nb ion and a Ti ion are arranged at random at a ratio of Nb : Ti = 2 : 1. With the skeleton structure portions 103 arranged alternately and three-dimensionally, void portions 104 are present among the skeleton structure portions 103. This void portion 104 serves as a host of lithium ions. As shown in FIG. 1, the void portions 104 can account for a large part of the entire crystal structure. Moreover, even when lithium ions are inserted, a structure of the void portions 104 can be stably held.

In FIG. 1, a region 105 and a region 106 are portions having two-dimensional channels in the [100] direction and the [010] direction. As shown in FIG. 2, a void portions 107 are present in the [001] direction in the crystal structure of the monoclinic niobium-titanium composite oxide. The void portions 107 have a tunnel structure advantageous in conduction of lithium ions, and serve as a conductive path in the [001] direction, connecting between the region 105 and the region 106. The presence of this conductive path enables transfer of lithium ions between the regions 105 and 106.

As thus described, the crystal structure of the monoclinic niobium-titanium composite oxide Nb₂TiO₇ contains a space where lithium ions are equivalently inserted is large, and structurally stable. Further, there are present two-dimensional channels in which lithium ions are rapidly diffused, and conductive paths connecting these channels in the [001] direction. Accordingly, in the crystal structure of the monoclinic niobium-titanium composite oxide Nb₂TiO₇, performance of lithium ions to be inserted into and extracted from the insertion spaces improve, and the insertion and extraction spaces for lithium ions effectively increase. Thus, the monoclinic niobium-titanium composite oxide can exhibit a high capacity and high rate performance.

Further, in the above crystal structure, when lithium ions are inserted into the void portions 104, each of the metal ions 101 constituting the skeleton 103 is reduced to a trivalent state, and hence the crystal structure is held electrically neutral. In the monoclinic niobium-titanium composite oxide, not only Ti ions are reduced from a tetravalent state to a trivalent state, but also an Nb ions are reduced from a pentavalent state to a trivalent state. Thus, the number of valences reduced per active material weight is large. For this reason, even when a large number of lithium ions are inserted, the crystal can be held electrically neutral. Accordingly, the monoclinic niobium-titanium composite oxide has higher energy density than that of a compound only containing a tetravalent cation, such as titanium oxide. Specifically, a theoretical capacity of the monoclinic niobium-titanium composite oxide is approximately 387 mAh/g, which is twice as large as or larger than that of titanium oxide having a spinel structure.

Further, the niobium-titanium composite oxide has a lithium insertion potential of approximately 1.5 V (vs. Li/Li⁺). Hence, the use of the active material containing the monoclinic niobium-titanium composite oxide enables provision of a battery capable of stably and repeatedly performing rapid charge-and-discharge.

From the above, the electrode according to the first embodiment includes the first electrode mixture layer that contains the monoclinic niobium-titanium composite oxide, and can thereby achieve a nonaqueous electrolyte battery capable of exhibiting an excellent rapid charge-and-discharge, and having a high energy density.

Moreover, the electrode according to the first embodiment includes a second electrode mixture layer containing lithium titanate having a spinel structure and formed on the first electrode mixture layer. A lithium titaniate having the spinel structure can exhibit excellent life characteristics. Further, since a lithium titanate having the spinel structure can serve as an insulator in the discharged state, the second electrode mixture layer can serve as an insulating material for the electrode surface. Further, a lithium titanate having the spinel structure has a lithium insertion potential of approximately 1.5 V (vs. Li/Li⁺), and can thus prevent lithium dendrite precipitation on the electrode surface due to charge-and-discharge. Accordingly, when the electrode according to the first embodiment is used in a nonaqueous electrolyte battery, a short circuit of the electrode according to the first embodiment can be prevented, to give excellent safety. Furthermore, since lithium titanate having the spinel structure can insert and extract lithium, the second electrode mixture layer can contributed to charge and discharge of the nonaqueous electrolyte battery. As a result, the electrode according to the first embodiment can realize a nonaqueous electrolyte battery which can exhibit a high capacity and can be excellent in life characteristics and safety.

The electrode according to the first embodiment can exhibit superior safety to an electrode that only includes, as an electrode mixture layer containing an active material, an electrode mixture layer containing a mixture of the monoclinic niobium-titanium composite oxide and the lithium titanate having the spinel structure. The reason for this is as follows. The lithium titanate having the spinel structure contained in the second electrode mixture layer that is included in the electrode according to the first embodiment is immediately discharged and insulated when an external impact such as a collision is applied to the nonaqueous electrolyte battery or when it is internally short-circuited with a counter electrode. The second electrode mixture layer containing insulated lithium titanate having the spinel structure can serve as an insulating material as described above. Due to the presence of the second electrode mixture layer on the first electrode mixture layer, the second electrode mixture layer serving as the insulating material at the time of the foregoing accident or the like, the electrode according to the first embodiment can prevent a large current from flowing in the first electrode mixture layer. On the other hand, in the electrode that only includes the electrode mixture layer containing the mixture of the monoclinic niobium-titanium composite oxide and lithium titanate having the spinel-type structure, while lithium titanate having the spinel structure can be insulated at the time of the foregoing accident or the like, the electrode mixture layer can hardly become a perfect insulating material since the monoclinic niobium-titanium composite oxide and lithium titanate having the spinel structure are contained in the same mixture layer. That is, in the electrode according to the first embodiment, the second electrode mixture layer can further prevent a large current from flowing at the time of the foregoing accident or the like.

The monoclinic niobium-titanium composite oxide contained in the first electrode mixture layer is preferably a composite oxide represented by a general formula of LiₐTiM_{b}Nb_{2±β}O_{7±σ}. Herein, 0 ≤ a ≤ 5, 0 ≤ b ≤ 0.3, 0 ≤ β ≤ 0.3, and 0 ≤ σ ≤ 0.3. M is at least one element selected from a group consisting of Fe, V, Mo and Ta. M may be one element, or two or more elements. Further, the monoclinic niobium-titanium composite oxide contained in the first electrode mixture layer more preferably has symmetry of a space group C2/m or P12/m1. The type of symmetry of a space group may be one or more than one.

A subscript a in the general formula of the monoclinic niobium-titanium composite oxide described above is a variable that may vary within the above range in accordance with a state-of-charge of the composite oxide. Further, subscripts b and β in the general formula of the monoclinic niobium-titanium composite oxide are variables each showing a degree to which a part of the sites of Ti and/or Nb in the niobium-titanium composite oxide is substituted by the metal element M. A subscript σ in the general formula of the monoclinic niobium-titanium composite oxide is a variable showing a charge compensation associated with substitution by the metal M and/or an inevitable deviation from a stoichiometric ratio.

The monoclinic niobium-titanium composite oxide may be contained in the form of primary particles in the first electrode mixture layer, or may be contained in the form of secondary particles, formed by aggregation of the primary particles, in the first electrode mixture layer. The monoclinic niobium-titanium composite oxide is desirably contained in the form of secondary particles in the first electrode mixture layer.

Observation with a scanning electron microscope (SEM) can lead to determination that the monoclinic niobium-titanium composite oxide is the secondary particles or the primary particles.

When the monoclinic niobium-titanium composite oxide is the secondary particles, the particles preferably have an average particle size of 1 µm to 100 µm. When the average secondary particle size is within this range, the particles are easy to handle in industrial production, a mass and a thickness can be made uniform in film coating for producing the electrode, and further, deterioration in surface smoothness of the electrode can be prevented. The average particle size of the secondary particles is more preferably from 3 µm to 30 µm.

As for the monoclinic niobium-titanium composite oxide, the primary particles constituting the secondary particles preferably have an average primary particle size of 1 nm to 10 µm. When the average primary particle size is within this range, the particles are easy to handle in industrial production, and diffusion of lithium ions in a solid of the niobium composite oxide can be promoted. The average primary particle size is more preferably from 10 nm to 1 µm.

As for the monoclinic niobium-titanium composite oxide, the primary particles are preferably isotropic. In the present embodiment, the isotropic particle means a particle having an aspect ratio of 3 or less. It can be confirmed that the primary particles are isotropic particles by observation with a scanning electron microscopy (SEM).

As for the monoclinic niobium-titanium composite oxide, a specific surface area of each of the secondary particles, measured by the BET method, is preferably from 5 m²/g to 50 m²/g. When the specific surface area is 5 m²/g or larger, it is possible to sufficiently ensure insertion and extraction sites for lithium ions. When the specific surface area is 50 m²/g or smaller, the particles become easy to handle in industrial production.

The lithium titanate having the spinel structure is desirably a composite oxide represented by a general formula of Li₄₊ₓTi₅O₁₂ (0 ≤ x ≤ 3). A subscript x in the general formula is a variable that may vary within the above range in accordance with a state-of-charge of the composite oxide.

Further, at least part of the primary particles or the secondary particles of the monoclinic niobium-titanium composite oxide is preferably covered with carbon. Providing carbon on the surface can enhance electric conductivity. An existential state of carbon can be determined by line analysis, mapping of carbon, or the like by use of an electron probe microanalyzer (EPMA) for a cross section of an active material.

The lithium titanate having the spinel structure may be contained in the form of the primary particles in the first electrode mixture layer, or may be contained in the form of the secondary particles, formed by aggregation of the primary particles, in the first electrode mixture layer. The lithium titanate having the spinel structure is desirably contained in the form of the primary particles in the first electrode mixture layer.

Observation with a scanning electron microscope (SEM) can lead to determination that the lithium titanate having the spinel structure is the secondary particles or the primary particles.

A particle size of the lithium titanate having the spinel structure can be controlled by a production method thereof. For example, an average primary particle size of the lithium titanate having the spinel structure can preferably be from 0.1 µm to 30 µm, and be more preferably from 1 µm to 10 µm approximately.

Next, the electrode according to the first embodiment will be described more in detail.

The electrode according to the first embodiment includes a current collector. The current collector is desirably formed of an electrochemically stable material in a potential range that is nobler than 1.0 V (vs. Li/Li⁺). Examples of such a material include aluminum, and an aluminum alloy containing aluminum and at least one element selected from a group consisting of Mg, Ti, Zn, Mn, Fe, Cu, and Si. The current collector can be formed in a sheet shape, such as metal foil.

The electrode according to the first embodiment further includes the first electrode mixture layer formed on the current collector. The first electrode mixture layer may be supported on one surface of the current collector, or may be supported on each surface thereof. Further, the current collector can include a portion not supporting the first electrode mixture layer. This portion can serve as an electrode tab, for example.

The first electrode mixture layer contains the monoclinic niobium-titanium composite oxide. The monoclinic niobium-titanium composite oxide can serve as an active material.

The first electrode mixture layer can contain a material other than the active material. Examples of such a material include a conductive agent and a binder.

The electrode according to the first embodiment further includes the second electrode mixture layer formed on the first electrode mixture layer. The second electrode mixture layer can constitute a surface layer of the electrode.

The second electrode mixture layer contains the lithium titanate having the spinel structure. The second electrode mixture layer may further contain an anatase-type titanium composite oxide (e.g., titanium dioxide). Containing the anatase-type titanium composite oxide can enhance a capacity. The lithium titanate having the spinel structure and the optional anatase-type titanium composite oxide can serve as active materials. The second electrode mixture layer can contain a material other than the active material. Examples of such a material include a conductive agent and a binder.

The conductive agent is blended for enhancing the current collecting performance and reducing the contact resistance between the active material and the current collector. Examples of the conductive agent include carbonaceous materials such as acetylene black, carbon black and graphite.

The binder is blended for filling gaps among the dispersed active materials, and binding the active material with the current collector. Examples of the binder include polytetrafluoroethylene (PTFE), polyvinylidene fluoride (PVdF), fluorine-based rubber, and styrene-butadiene rubber.

In the first electrode mixture layer and the second electrode mixture layer, it is preferable to blend the active material, the conductive agent and the binder at ratios of 70% to 96% by mass, 2% to 28% by mass, and 2% to 28% by mass, respectively. By blending the conductive agent in amount of 2% by mass or more, the current collecting performance of the layer containing the active material can be improved. Further, by blending the binder in amount of 2% by mass or more, binding properties between the layer containing the active material and the current collector become sufficient, and excellent cycle characteristics can be expected. On the other hand, each of the conductive agent and the binder is preferably blended in amount of 28% by mass or less, so as to obtain a high capacity.

A density of each of the first electrode mixture layer and the second electrode mixture layer is desirably within a range of 2 g/cm³ to 3.5 g/cm³. With the density being within this range, it is possible to improve the capacity and the rate performance of the nonaqueous electrolyte battery.

When an average thickness of the first electrode mixture layer is referred to as a first thickness and an average thickness of the second electrode mixture layer is referred to as a second thickness, a ratio of the second thickness to the first thickness is preferably from 0.01 to 2. With the thickness ratio being within this range, it is possible to achieve a favorable balance among the capacity, the life characteristics and the safety. The ratio of the second thickness to the first thickness is more preferably from 0.1 to 1.5.

It should be noted that the first thickness of the first electrode mixture layer and the second thickness of the second electrode mixture layer can be measured by a method described later.

### <Production method>

The electrode according to the first embodiment can be produced by the following method, for example.

First, the monoclinic niobium-titanium composite oxide, the conductive agent and the binder are suspended in a solvent, to prepare a first slurry. The prepared first slurry is applied to one surface or each surface of the current collector, and the coated film is dried, to form the first electrode mixture layer. Subsequently, the lithium titanate having the spinel structure, the conductive agent and the binder are suspended in a solvent, to prepare a second slurry. The prepared second slurry is applied onto the first layer, and the coated film is dried, to form the second electrode mixture layer. Thereafter, the laminated product thus obtained is pressed, to obtain an electrode. It should be noted that cutting may be performed as needed before or after the pressing.

The monoclinic niobium-titanium composite oxide can be produced, for example, by a solid phase method described below.

First, starting materials are mixed. As the starting materials, oxides or salts optionally containing Ti, Nb and Zr are used. When TiNb₂O₇ is to be synthesized, oxides such as titanium dioxide or niobium pentoxide can be used as the starting materials. The salts to be used as the starting materials are preferably salts that are decomposed at a relatively low temperature to generate oxides, such as hydroxide salts, carbonates and nitrates, and appropriate ones are niobium hydroxide, zirconium hydroxide, and the like.

Next, the obtained mixture is ground, to obtain a mixture as uniform as possible. Then, the obtained mixture is sintered. The sintering can be performed within a temperature range of 900°C to 1400°C for 1 to 100 hours in total.

By the above process, the monoclinic niobium-titanium composite oxide can be obtained. It should be noted that a composite oxide containing lithium can also be synthesized by using a compound containing lithium such as lithium carbonate.

Next, a description will be given of the process of grinding the monoclinic niobium-titanium composite oxide obtained by the above process, to obtain agglomerated particles.

First, the monoclinic niobium-titanium composite oxide as described above is ground into a fine particle form by use of grinding aids such as water, ethanol, methanol, diethylene glycol, polyethylene glycol, cyclohexane, 2-propanol, and 1-butanol. Subsequently, the composite oxide in the fine particle form is formed into agglomerated particles by use of a spray drying method or the like. The agglomerated particles thus obtained are subjected to thermal treatment, and hence secondary particles of the monoclinic niobium-titanium composite oxide can be obtained.

A specific example will be described below.

First, 5 g of polyethylene glycol and 150 g of pure water are added to a niobium composite oxide (150 g) obtained by sintering, which is then subjected to grinding and dispersion processing in a zirconia bead ball mill with a diameter of 5 mmΦ for 12 hours, to prepare a uniform slurry. Subsequently, this slurry is sprayed into an air atmosphere at 180°C, and dried, to obtain a granulated body having an average particle size of about 10 µm. The granulated body obtained in this manner is sintered for 3 hours at 900°C in the air, and hence agglomerated particles can be obtained.

Next, a description will be given of a measurement method for each parameter as to the electrode according to the first embodiment.

### (Disassembly Method of Battery)

When the electrode according to the first embodiment is incorporated as a negative electrode into a battery, it can be taken out in such a manner as follows. First, the battery is brought into a discharged state. The battery can be brought into the discharged state by, for example, discharging the battery at a current of 0.1 C under an environment at 25°C until the battery voltage reaches to a nominal final voltage. Next, the battery in the discharged state is disassembled to take out an electrode (e.g., a negative electrode). The taken-out electrode is washed with methylethyl carbonate, for example. Thus, the electrode to be measured is obtained.

### (Confirmation of Structure of Electrode)

A structure of the electrode can be confirmed by, for example, observing a cross section of the electrode by means of a scanning electron microscope (SEM).

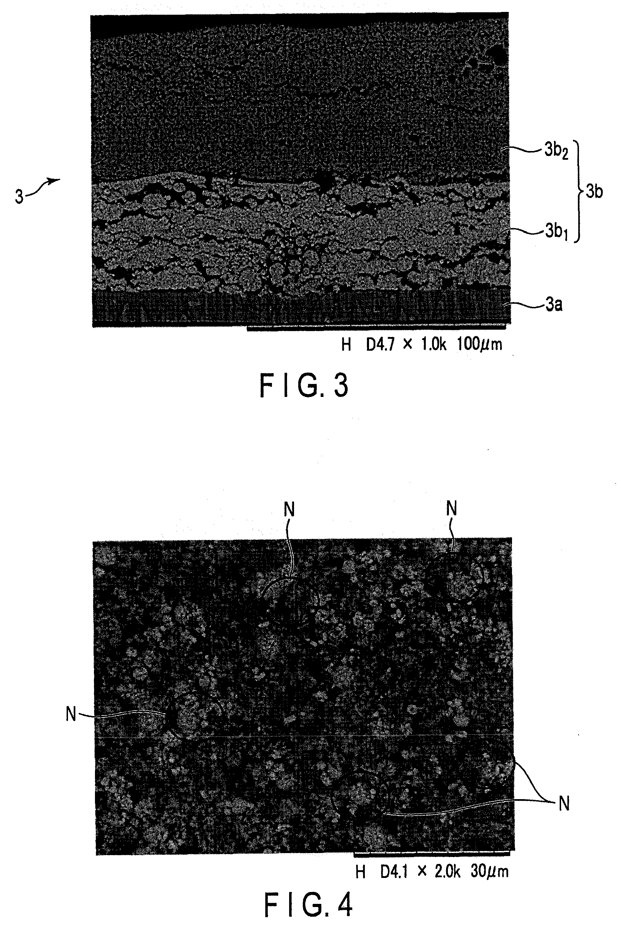

FIG. 3 is a sectional SEM image of an example of the electrode according to the first embodiment.

An electrode 3 shown in FIG. 3 includes a current collector 3a, a first electrode mixture layer 3b₁ formed on one surface of the current collector 3a, and a second electrode mixture layer 3b₂ formed on the first electrode mixture layer 3b₁. The first electrode mixture layer 3b₁ and the second electrode mixture layer 3b₂ constitute an electrode mixture layer 3b. The second electrode mixture layer 3b₂ forms the surface of the electrode 3. In the electrode shown in FIG. 3, a boundary between the first electrode mixture layer and the second electrode mixture layer can be visually recognized.

On the other hand, in the electrode mixture layer containing both the monoclinic niobium-titanium composite oxide and the lithium titanate having the spinel structure, an interface, which is similarly to one shown in FIG. 3, between electrode mixture layers cannot be confirmed. For example, FIG. 4 is a sectional SEM image of an electrode mixture layer of a reference example. The electrode mixture layer shown in FIG. 4 contains both the monoclinic niobium-titanium composite oxide and the lithium titanate having the spinel structure. Although the presence of a monoclinic niobium-titanium composite oxide N can be confirmed in a circled portion, an interface between electrode mixture layers cannot be confirmed.

Next, the first electrode mixture layer and the second electrode mixture layer will be described with reference to the respective enlarged SEM images.

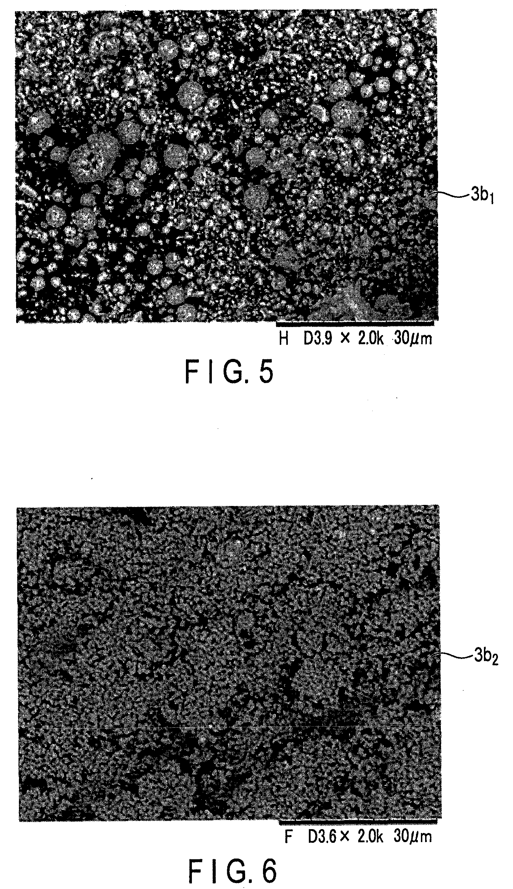

FIG. 5 is a sectional SEM image of the first electrode mixture layer in an example of the electrode according to the first embodiment. In the sectional SEM image shown in FIG. 5, a part of the first electrode mixture layer 3b₁ is shown, and an aggregate of fine particles having a size of approximately 1 µm, namely a granulated body, is shown. FIG. 6 is a sectional SEM image of the second electrode mixture layer in an example of the electrode according to the first embodiment. In the sectional SEM image shown in FIG. 6, a part of the second electrode mixture layer 3b₂ is shown, and fine particles having a size of approximately 1 µm to 3 µm are shown.

### (Measurement Method for Thickness of Electrode Mixture Layer)

A thickness of the electrode mixture layer can be measured as follows.

There are obtained sectional SEM images in each of which the whole of each of the first electrode mixture layer and the second electrode mixture layer in the thickness direction is seen. Next, the upper end of the first electrode mixture layer is equally divided into four in the range of the sectional SEM image, and a thickness at the center of each quarter obtained from the first electrode mixture layer is measured by means of a scale bar shown in the sectional SEM image, to obtain an average thickness of the first electrode mixture layer. A thickness of the second electrode mixture layer can also be measured in a similar manner as above.

### (Analysis of Materials included in First Electrode Mixture Layer and Second Electrode Mixture Layer)

After the thickness of each electrode mixture layer has been measured as thus described, while the thickness of the second electrode mixture layer is considered, etching is performed down to a depth at which a part of the second electrode mixture layer is exposed. A sample can be taken out of the second electrode mixture layer with a part thereof exposed, to be subjected to each analysis below.

Subsequently, while the thicknesses of the first electrode mixture layer and the second electrode mixture layer are considered, etching is performed down to a depth at which a part of the first electrode mixture layer is exposed. A sample can be taken out of the first electrode mixture layer with a part thereof exposed, to be subjected to each analysis below.

### <Composition Analysis for Sample>

A composition of the sample can be identified by, for example, X-ray diffraction (XRD), X-ray photoelectron spectroscopy (XPS), electron probe X-ray microanalysis (EPMA), Auger electron spectroscopy, or Raman spectroscopy. These analyses can also be performed on the exposed surface of each of the first electrode mixture layer and the second electrode mixture layer, while no sample has been taken out.

Further, the composition of the sample can also be confirmed by Fourier-transform infrared spectroscopy (FTIR).

### <Wide-angle X-ray Diffraction Measurement>

A crystal structure of the active material can be detected by wide-angle X-ray diffraction (XRD).

A wide-angle X-ray diffraction measurement of the active material is performed as follows. First, a target sample is ground until an average particle size thereof becomes approximately 5 µm. The average particle size can be confirmed by a laser diffraction method. A holder portion having a depth of 0.2 mm and formed on a glass sample plate is filled with the ground sample. At this time, necessary care should be taken to sufficiently fill the holder portion with the sample. Further, necessary care should be taken to prevent formation of a crack, a void and the like due to insufficient filling with the sample. Subsequently, the sample is pressed from the outside by use of another glass plate, to smooth the surface of the sample. Necessary care should be taken to prevent generation of protrusion or depression from a reference surface of the holder due to excess or deficiency in filling amount. Then, the glass plate filled with the sample is loaded to the wide-angle X-ray diffractometer to obtain a diffraction pattern by use of Cu-Kα rays.

It should be noted that, when the orientation of the sample is high, a position of a peak may shift or an intensity ratio may change, depending on the sample filling manner. Such a sample is measured after being formed into the shape of a pellet. The pellet may be a green compact having a diameter of 10 mm and a thickness of 2 mm, for example. The green compact can be produced by applying a pressure of about 250 MPa to the sample for 15 minutes. The obtained pellet is set on the X-ray diffractometer, to measure the surface thereof. Performing the measurement by such a method can eliminate a difference in measurement result depending on an operator, and improve the reproducibility.

When the active material contained in the electrode is to be measured by wide-angle X-ray diffraction, the measurement can be performed as follows, for example.

In order to grasp the crystal state of the active material, the active material is brought into a state where lithium ions have been completely extracted from the active material. For example, when the active material is used as the negative electrode, the battery is brought into a completely discharged state. However, even in the discharged state, there may be present lithium ions having been left. Next, the battery is disassembled in a glove box filled with argon, and washed with an appropriate solvent. For example, ethyl methyl carbonate or the like may be used. A portion of the washed electrode, which has almost the same area as that of the holder of the wide-angle X-ray diffractometer, may be cut out, to be attached directly to the glass holder and measured. At this time, XRD is previously measured in accordance with the type of metal foil of the electrode current collector, so as to grasp at which position the peak derived from the current collector appears. Further, the presence or absence of peaks of mixture materials such as a conductive agent and a binder is previously grasped. When the peak of the current collector overlaps with the peak of the active material, it is desirable to perform measurement after removing the active material from the current collector. This is aimed at separating the overlapped peaks when a peak intensity is to be quantitatively measured. Naturally, this operation can be omitted so long as these peaks are previously grasped. While the electrode may be peeled off physically, it is easy to peel off when an ultrasonic wave is applied to the electrode in a solvent. By measuring the electrode thus recovered, the wide-angle X-ray diffraction measurement of the active material can be performed.

The results of wide-angle X-ray diffraction thus obtained are analyzed by the Rietveld method. In the Rietveld method, diffraction patterns calculated from a crystal structure model estimated in advance can all be fitted with actual measured values, to refine the parameters (lattice constant, atomic coordinate, occupancy, etc.) concerning the crystal structure, and examine characteristics of the crystal structure of the active material.

### <Measurement of Content of each Element in Active Material>

The content of each element in the active material can be measured in the following procedure.

First, the samples respectively obtained from the first electrode mixture layer and the second electrode mixture layer as described above are subjected to centrifugal separation, to isolate the active material. The sample isolated in this manner is taken as a measurement target sample.

The content of each element in the active material can be measured by inductively coupled plasma (ICP) emission spectroscopy. The measurement of the content of each element by ICP emission spectroscopy can be carried out by, for example, the following method. The active material extracted in such a manner as described above is weighed and taken out into a container, and then melted with an acid or alkali to obtain a measurement solution. This measurement solution is subjected to ICP emission spectroscopy with a measurement device (e.g., SPS-1500V, manufactured by SII NanoTechnology Inc.), to measure the content of each element.

It is permitted that the active material described above contains, other than the elements described above, 1000 ppm by mass or less of impurities inevitable from a production view point.

### <Confirmation of Solid-Solved State>

Whether or not the added element M is substitutional-solidified can be judged by confirming the state of the crystal phase using the wide-angle X-ray diffraction analysis. The evaluation items may include, specifically, the presence or absence of appearance of an impurity phase, change of a lattice constant (which reflects an ionic radius of the element added), and the like. In a case of a slight amount of addition, however, there are some cases in which the judgement cannot be performed by these methods. In such a case, a distribution state of the element added can be found by performing a TEM observation and an EPMA measurement, whereby whether the element added is uniformly distributed in the solid or segregated can be judged.

### <Measurement Method for Secondary Particle Size>

The average secondary particle size of the active material can be measured in the following procedure, for example. As a measurement apparatus, a laser diffraction particle size distribution measuring analyzer (for example, SALD-300 manufactured by Shimadzu Corporation) can be used. First, about 0.1 g of a sample, 1 mL to 2 mL of surfactant, and 1 mL to 2 mL distilled water are put into a beaker to obtain mixture, and the mixture is thoroughly stirred. The mixture is injected into a stirring-water tank, and a sample solution is prepared in this tank. Using the sample solution, luminosity distribution is measured 64 times at 2 second intervals, and the particle size distribution data is analyzed.

### <Measurement method for Primary Particle Size>

The average primary particle size of the active material can be confirmed by observation with a scanning electron microscope (SEM). An average of ten typical particles, which are extracted from a typical viewing field, is obtained, to decide the average primary particle size.

### <Measurement Method for Specific Surface Area>

The specific surface area of the active material particle is measured using a method where a molecule whose adsorption occupying area is known is adsorbed to the surface of the powder particle at a temperature of liquid nitrogen, to obtain the specific surface area of the sample from the amount of the adsorbed molecule. The method most often used is the BET method performed based on the low-temperature and low-humidity physical adsorption of an inert gas. The BET method is the most famous theory as a method for calculating the specific surface area, the method being obtained by extending the Langmuir theory, which is a monolayer adsorption theory, to multilayer adsorption. The specific surface area thereby obtained is referred to as a BET specific surface area.

According to the first embodiment described above, there is provided an electrode. The electrode includes the current collector, the first electrode mixture layer formed on the current collector, and the second electrode mixture layer formed on the first electrode mixture layer. The first electrode mixture layer contains the monoclinic niobium-titanium composite oxide. The second electrode mixture layer contains the lithium titanate having the spinel structure. Hence the electrode according to the first embodiment can achieve a nonaqueous electrolyte battery which can exhibit a high capacity and can be excellent in life characteristics and safety.

The electrode according to the first embodiment can be used as the negative electrode or the positive electrode of the nonaqueous electrolyte battery, and even when it is used as either electrode, it can achieve a nonaqueous electrolyte battery which can exhibit a high capacity and can be excellent in life characteristics and safety.

An example of the nonaqueous electrolyte using the electrode according to the first embodiment as the negative electrode will be described as a second embodiment below.

On the other hand, in the case of the nonaqueous electrolyte battery using the electrode according to the first embodiment as the positive electrode, metallic lithium, a lithium alloy, or a carbonaceous material such as graphite or coke can be used for the active material of the negative electrode as the counter electrode of the positive electrode.

### (Second Embodiment)

According to the second embodiment, a nonaqueous electrolyte battery is provided. This nonaqueous electrolyte battery includes a positive electrode, a negative electrode and a nonaqueous electrolyte. The negative electrode is the electrode according to the first embodiment.

The nonaqueous electrolyte battery according to the second embodiment can further include a separator provided between the positive electrode and the negative electrode. The positive electrode, the negative electrode, and the separator can constitute an electrode group. The nonaqueous electrolyte may be held in the electrode group.

The nonaqueous electrolyte battery according to the second embodiment can further include a container member accommodating the electrode group and the nonaqueous electrolyte.

The nonaqueous electrolyte battery according to the second embodiment can further include a positive electrode terminal electrically connected to the positive electrode and a negative electrode terminal electrically connected to the negative electrode. At least a part of the positive electrode terminal and at least a part of the negative electrode terminal may be extended to the outside of the container member.

Hereinafter, the negative electrode, the positive electrode, the nonaqueous electrolyte, the separator, the container member, the positive electrode terminal, and the negative electrode terminal each of which can be used in the nonaqueous electrolyte battery according to the second embodiment will be described in detail.

### (1) Negative Electrode

The negative electrode is the electrode according to the first embodiment

### (2) Positive Electrode

The positive electrode can include a positive electrode current collector and a positive electrode mixture layer (positive electrode active material-containing layer) supported on one or each surface of the current collector.

The positive electrode layer can include a positive electrode active material and a binder.

The positive electrode active material may be, for example, an oxide, a sulfide, or polymer. Examples of the positive electrode active material include manganese dioxide (MnO₂), iron oxide, copper oxide, nickel oxide, each of which can be inserting lithium; lithium manganese composite oxide (e.g., LiₓMn₂O₄ or LiₓMnO₂), lithium nickel composite oxide (e.g., LiₓNiO₂), lithium cobalt composite oxide (e.g., LiₓCoO₂), lithium nickel cobalt composite oxide (e.g., LiNi_{1-y}Co_{y}O₂), lithium manganese cobalt composite oxide (e.g., LiₓMn_{y}Co_{1-y}O₂), lithium manganese nickel composite oxide having a spinel structure (e.g., LiₓMn_{2-y}Ni_{y}O₄), lithium phosphorus oxide having an olivine structure (e.g., LiₓFePO₄, LiₓFe_{1-y}Mn_{y}PO₄, and LiₓCoPO₄), iron sulfate [Fe₂(SO₄)₃], vanadium oxide (e.g., V₂O₅), and lithium nickel cobalt manganese composite oxide. In the above-described formula, 0 < x ≤ 1, and 0 < y ≤ 1. As the positive electrode active material, one of these compounds may be used singly, or combination of two or more of the compounds can be used.

As the polymer, for example, conductive polymer materials such as polyaniline and polypyrrole, and disulfide polymer materials may be used. Sulphur (S) and carbon fluoride may also be used as the active material.

Examples of the more preferable positive electrode active material may include lithium manganese composite oxide (for example, LiₓMn₂O₄), lithium nickel composite oxide (LiₓNiO₂), lithium cobalt composite oxide (LiₓCoO₂), lithium nickel cobalt composite oxide (LiₓNi_{1-y}Co_{y}O₂), lithium manganese nickel composite oxide having a spinel structure (LiₓMn_{2-y}Ni_{y}O₄), lithium manganese cobalt composite oxide (LiₓMn_{y}Co_{1-y}O₂), lithium iron phosphate (for example, LiₓFePO₄), and lithium nickel cobalt manganese composite oxide, each of which exhibits a high positive electrode voltage. In the formula, x and y are preferably 0 < x ≤ 1 and 0 ≤ y ≤ 1.

When an nonaqueous electrolyte containing an ordinary-temperature molten salt is used, it is preferred in the light of cycle life that at least one selected from lithium iron phosphate, LiₓVPO₄F (0 ≤ x ≤ 1), lithium manganese composite oxide, lithium nickel composite oxide, and lithium nickel cobalt composite oxide is used. This is because these compounds have low reactivity with ordinary-temperature molten salts.

The specific surface area of the positive electrode active material is preferably 0.1 m²/g to 10 m²/g. The positive electrode active material having a specific surface area of 0.1 m²/g or more can secure sufficient sites in which lithium ions can be inserted and extracted. The positive electrode active material having a specific surface area of 10 m²/g or less is easy to handle during industrial production, and can secure a good charge-and-discharge cycle performance.

The binder is added to bind the positive electrode active material with the current collector. Examples of the binder include polytetrafluoroethylene (PTFE), polyvinylidene fluoride (PVdF), and fluorine rubber.

The conductive agent can be, as necessary, added the positive electrode mixture layer, in order to improve the current collection performance, and to suppress the contact resistance between the positive electrode active material and current collector. Examples of the conductive agent include carbonaceous substances such as acetylene black, carbon black and graphite.

In the positive electrode mixture layer, the blending ratios of the positive electrode active material and binder are preferably 80% by mass to 98% by mass, and 2% by mass to 20% by mass, respectively. When the binder content is 2% by mass or more, sufficient electrode strength can be sufficiently achieved. When the binder content is 20% by mass or less, the loading of the insulator in the electrode can be reduced, and thereby the internal resistance can be decreased.

When a conductive agent is added, the blending ratios of the positive electrode active material, binder, and conductive agent are preferably 77% by mass to 95% by mass, 2% by mass to 20% by mass, and 3% by mass to 15% by mass, respectively. When the content of the conductive agent is 3% by mass or more, the above-described effects can be sufficiently achieved. By setting the amount of conductive agent to 15% by mass or less, the decomposition of a nonaqueous electrolyte on the surface of the positive electrode conductive agent in high-temperature storage can be reduced.

The positive electrode current collector is preferably an aluminum foil, or an aluminum alloy foil containing one or more elements selected from Mg, Ti, Zn, Ni, Cr, Mn, Fe, Cu, and Si.

The thickness of the aluminum foil or aluminum alloy foil is preferably 5 µm to 20 µm, and more preferably 15 µm or less. The purity of the aluminum foil is preferably 99% by mass or more. The content of the transition metal such as iron, copper, nickel, or chromium contained in the aluminum foil or aluminum alloy foil is preferably 1% by mass or less.

The positive electrode is produced by, for example, suspending a positive electrode active material, a binder, and as necessary a conductive agent in an appropriate solvent to prepare a slurry, applying the slurry to a positive electrode current collector, drying the coating to form a positive electrode mixture layer, and then pressing the layer.

Alternatively, the positive electrode may be also produced by forming an active material, a binder, and as necessary a conductive agent into pellets to produce a positive electrode mixture layer, and placing it on a current collector.

### (3) Nonaqueous Electrolyte

The nonaqueous electrolyte may be, for example, a liquid nonaqueous electrolyte which is prepared by dissolving an electrolyte in an organic solvent, or gel-like nonaqueous electrolyte which is a composite of a liquid electrolyte and a polymer material.

The liquid nonaqueous electrolyte is preferably prepared by dissolving an electrolyte in an organic solvent in the concentration of 0.5 mol/L to 2.5 mol/L.

Examples of the electrolyte include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte is preferably resistant to oxidation even at a high potential, and most preferably LiPF₆.

Examples of the organic solvent include a cyclic carbonate such as propylene carbonate (PC), ethylene carbonate (EC), or vinylene carbonate; a chain carbonate such as diethyl carbonate (DEC), dimethyl carbonate (DMC), and methyl ethyl carbonate (MEC); a cyclic ether such as tetrahydrofuran (THF), 2-methyl tetrahydrofuran (2MeTHF), or dioxolane (DOX); a chain ether such as dimethoxy ethane (DME) or diethoxy ethane (DEE); γ-butyrolactone (GBL), acetonitrile (AN), and sulfolane (SL). One of these organic solvents can be used alone or a mixed solvent can be used.

Examples of the polymeric material include polyvinylidene fluoride (PVdF), polyacrylonitrile (PAN), and polyethylene oxide (PEO).

Alternatively, the nonaqueous electrolyte may be, for example, an ordinary-temperature molten salt (ionic melt) containing lithium ions, a polymer solid electrolyte, or an inorganic solid electrolyte.

The ordinary-temperature molten salt (ionic melt) means compounds which can exist in a liquid state at ordinary temperature (15 to 25°C) among organic salts constituted of combinations of organic cations and anions. The ordinary-temperature molten salt includes an ordinary-temperature molten salt which exists alone as a liquid, an ordinary-temperature molten salt which becomes a liquid after being mixed with an electrolyte, and an ordinary-temperature molten salt which becomes a liquid after being dissolved in an organic solvent. In general, the melting point of the ordinary-temperature molten salt used in nonaqueous electrolyte batteries is 25°C or below. The organic cations generally have a quaternary ammonium skeleton.

The polymer solid electrolyte is prepared by dissolving the electrolyte in a polymeric material, and solidifying it.

The inorganic solid electrolyte is a solid substance having lithium ion conductivity.

### (4) Separator

The separator may be made of, for example, a porous film or synthetic resin nonwoven fabric containing polyethylene, polypropylene, cellulose, or polyvinylidene fluoride (PVdF). Among these, a porous film containing polyethylene or polypropylene can improve safety because the porous film melts at a fixed temperature to be able to shut off a current.

### (5) Container Member

The container member may be, for example, a laminate film having a thickness of 0.5 mm or less, or a metal case having a wall thickness of 1 mm or less. The thickness of the laminate film is more preferably 0.2 mm or less. The wall thickness of the metal case is more preferably 0.5 mm or less, and still more preferably 0.2 mm or less.

The shape of the container member is not particularly limited, and may be, for example, flat (thin), square, cylinder, coin, or button-shaped. The container member depends on the size of the battery, and may be, for example, that for a compact battery mounted on mobile electronic devices, and a large battery mounted on two- to four-wheel automobiles.

The laminate film used herein is a multilayer film including resin layers and a metal layer sandwiched between the resin layers. The metal layer is preferably an aluminum foil or an aluminum alloy foil for reducing weight. The resin layer may be, for example, a polymeric material such as polypropylene (PP), polyethylene (PE), nylon, or polyethylene terephthalate (PET). The laminate film may be heat-sealed to be formed into the shape of the container member.

The metal case is made of aluminum or an aluminum alloy, for example. As the aluminum alloy, an alloy containing an element such as magnesium, zinc, or silicon is preferable. If a transition metal such as iron, copper, nickel, or chromium is contained in the alloy, the content thereof is preferably set to 1% by mass or less, thereby long-term reliability and heat-radiation property can be significantly improve.

### (6) Positive Electrode Terminal and Negative electrode Terminal

The negative electrode terminal may be made of a material which is electrochemically stable at the potential at which the negative electrode active material described above inserts and extracts Li, and has electrical conductivity. Specific examples of the material for the negative electrode terminal include copper, nickel, stainless steel, or aluminum. The negative electrode terminal is preferably made of the same material as the negative electrode current collector in order to reduce the contact resistance with the negative electrode current collector.

The positive electrode terminal may be made of, for example, a material which is electrically stable in the potential range of 3 V to 5 V based on the oxidation-reduction potential of lithium, and has electrical conductivity. Specifically, the positive electrode terminal is made of aluminum or an aluminum alloy containing Mg, Ti, Zn, Mn, Fe, Cu, and Si or the like. The positive electrode terminal is preferably made of the same material as the positive electrode current collector in order to reduce contact resistance with the positive electrode current collector.

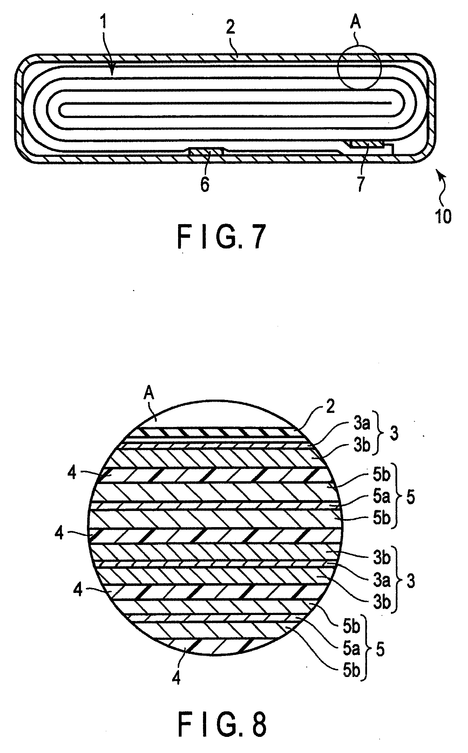

Next, an example of the nonaqueous electrolyte battery according to the second embodiment will be more specifically described with reference to FIGS. 7 and 8.

FIG. 7 is a schematic sectional view of an example of the nonaqueous electrolyte battery according to the second embodiment. FIG. 8 is an enlarged view of a portion A of FIG. 7.

A flat-type nonaqueous electrolyte battery 10 shown in FIG. 7 includes a flat-type coiled electrode group 1, and a baggy container member 2 accommodating this electrode group. The baggy container member 2 is made of a laminated film formed by sandwiching a metal layer between two resin films.

The flat-type coiled electrode group 1 is formed by spirally coiling a laminated product obtained by laminating a negative electrode 3, a separator 4, a positive electrode 5 and a separator 4 in this order from the outside, followed by press molding. As shown in FIG. 8, the outermost portion of the negative electrode 3 has a configuration in which a negative electrode mixture layer 3b is formed on one surface of a negative electrode current collector 3a, and the other portion of the negative electrodes 3 have a configuration in which the negative electrode mixture layer 3b is formed on each surface of the negative electrode current collector 3a. The positive electrode 5 has a configuration in which a positive electrode mixture layer 5b is formed on each surface of a positive electrode current collector 5a.

In the vicinity of the outer peripheral end of the coiled electrode group 1, a negative electrode terminal 6 is connected to the negative electrode current collector 3a of the outermost negative electrode 3, and a positive electrode terminal 7 is connected to the positive electrode current collector 5a of the positive electrode 5 on the inside. The negative electrode terminal 6 and the positive electrode terminal 7 are externally extended from an opening of the baggy container member 2. For example, a liquid nonaqueous electrolyte has been injected via the opening of the baggy container member 2. The opening of the baggy container member 2 is thermally sealed as sandwiched between the negative electrode terminal 6 and the positive electrode terminal 7, thereby to completely seal the coiled electrode group 1 and the liquid nonaqueous electrolyte.

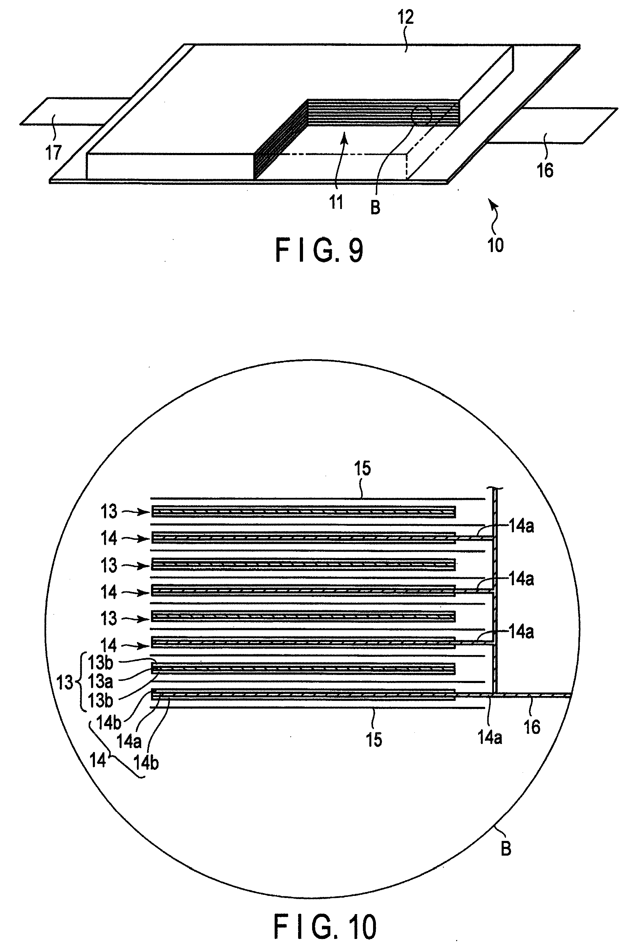

The nonaqueous electrolyte battery according to the second embodiment is not restricted to the one having the configuration shown in FIGS. 7 and 8 described above, but it may have a configuration shown in FIGS. 9 and 10, for example.

FIG. 9 is a partially cutaway perspective view schematically showing another example of the nonaqueous electrolyte battery according to the second embodiment. FIG. 10 is an enlarged view of a portion B of FIG. 9.

A flat-type nonaqueous electrolyte battery 10 shown in FIGS. 9 and 10 includes a stacked-type electrode group 11, and the container member 12 accommodating this electrode group. The container member 12 is made of a laminate film formed by between a metal layer between two resin films.

As shown in FIG. 10, the stacked-type electrode group 11 has a structure in which positive electrodes 13 and negative electrodes 14 are alternately laminated with separators 15 sandwiched therebetween. A plurality of positive electrodes 13 are present, and each include a current collector 13a and a positive electrode mixture layer 13b supported on each surface of the current collector 13a. A plurality of negative electrodes 14 are present, and each include a current collector 14a and a negative electrode mixture layer 14b supported on each surface of the current collector 14a. One side of the current collector 14a of each negative electrode 14 projects from the positive electrode 13. The projecting current collector 14a is electrically connected to a band-like negative electrode terminal 16. The tip of the band-like negative electrode terminal 16 is pulled out from the container member 12. Further, although not shown, a side of the current collector 13a of the positive electrode 13, which is located on the opposite side to the projecting side of the current collector 14a, projects from the negative electrode 14. The current collector 13a projecting from the negative electrode 14 is electrically connected to a band-like positive electrode terminal 17. The tip of the band-like positive electrode terminal 17 is located on the opposite side to the negative electrode terminal 16, and pulled out from the side of the container member 12.

Since the nonaqueous electrolyte battery according to the second embodiment includes the electrode according to the first embodiment, it can exhibit a high capacity, and exhibit excellent life characteristics and safety.

### (Third Embodiment)

According to the third embodiment, a battery pack is provided. This battery pack includes the nonaqueous electrolyte battery according to the second embodiment.

The battery pack according to the third embodiment can include a plurality of nonaqueous electrolyte batteries. The nonaqueous electrolyte batteries can be electrically connected to each other in series, or electrically connected to each other in parallel. Alternatively, the nonaqueous electrolyte batteries can be connected in series and parallel in combination.

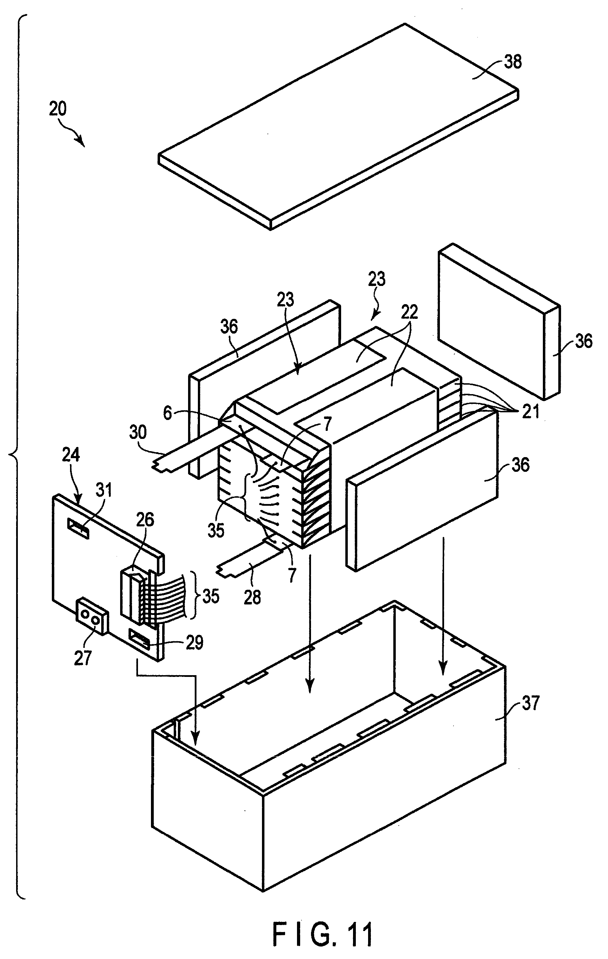

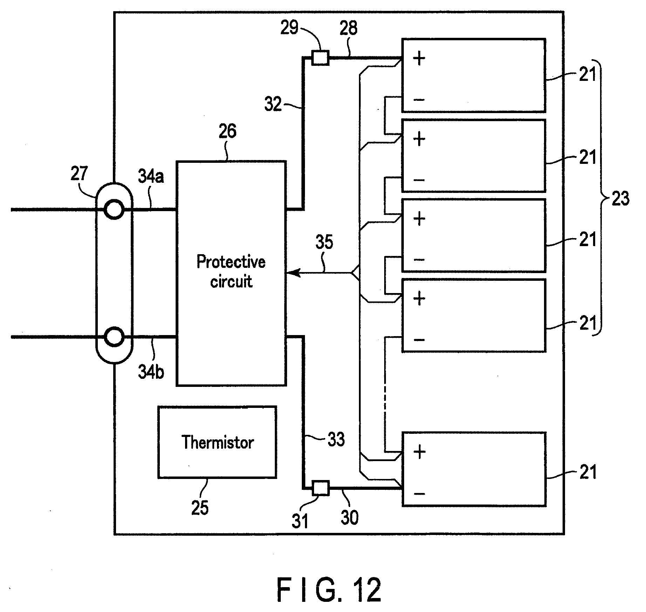

Next, a battery pack as an example according to the third embodiment will be described with reference to the FIGS. 11 and 12.

FIG. 11 is an exploded perspective view of the battery pack as an example according to the third embodiment. FIG. 12 is a block diagram showing an electric circuit of the battery pack of FIG. 11.

A battery pack 20 shown in FIGS. 11 and 12 includes a plurality of unit cells 21. Each of the plurality of unit cells 21 is flat-type nonaqueous electrolyte battery described with reference to FIGS. 7 and 8.

The plurality of unit cells 21 are stacked so that the negative electrode terminal 6 and the positive electrode terminal 7 extended outside are arranged in the same direction, and fastened with an adhesive tape 22 to constitute a battery module 23. The unit cells 21 are electrically connected to each other in series as shown in FIG. 12.

A printed wiring board 24 is arranged opposed to the side plane where the negative electrode terminal 6 and the positive electrode terminal 7 of the unit cell 21 are extended. A thermistor 25, a protective circuit 26, and an energizing terminal 27 to an external device are mounted on the printed wiring board 24 as shown in FIG. 12. An electric insulating plate (not shown) is attached to the surface of the printed wiring board 24 facing the battery module 23 to avoid unnecessary connection of the wires of the battery module 23.

A positive electrode-side lead 28 is connected to the positive electrode terminal 7 located at the bottom layer of the battery module 23 and the distal end of the lead 28 is inserted into a positive electrode-side connector 29 of the printed wiring board 24 so as to be electrically connected. An negative electrode-side lead 30 is connected to the negative electrode terminal 6 located at the top layer of the battery module 23 and the distal end of the lead 30 is inserted into an negative electrode-side connector 31 of the printed wiring board 24 so as to be electrically connected. The connectors 29 and 31 are connected to the protective circuit 26 through wirers 32 and 33 formed in the printed wiring board 24.

The thermistor 25 detects the temperature of the unit cells 21 and the detection signal is sent to the protective circuit 26. The protective circuit 26 can shut down a plus-side wirer 34a and a minus-side wirer 34b between the protective circuit 26 and the energizing terminal 27 to an external device under a predetermined condition. The predetermined condition indicates, for example, the case where the temperature detected by the thermistor 25 becomes a predetermined temperature or more. Another example of the predetermined condition indicates the case where the over-charge, over-discharge, or over-current of the unit cells 21 is detected. The detection of the over-charge and the like is performed on each of the unit cells 21 or the whole of the battery module 23. When each of the unit cells 21 is detected, the cell voltage may be detected, or positive electrode or negative electrode potential may be detected. In the case of the latter, a lithium electrode to be used as a reference electrode is inserted into each of the unit cells 21. In the case of the battery pack 20 of FIGS. 11 and 12, wirers 35 for voltage detection are connected to each of the unit cells 21. Detection signals are sent to the protective circuit 26 through the wirers 35.

Protective sheets 36 including rubber or resin are arranged on three side planes of the battery module 23 except the side plane from which the positive electrode terminal 7 and the negative electrode terminal 6 are protruded.

The battery module 23 is housed in a housing container 37 together with each of the protective sheets 36 and the printed wiring board 24. That is, the protective sheets 36 are arranged on both internal surfaces in a long side direction and on one internal surface in a short side direction of the housing container 37. The printed wiring board 24 is arranged on the other internal surface in a short side direction. The battery module 23 is located in a space surrounded by the protective sheets 36 and the printed wiring board 24. A lid 38 is attached to the upper surface of the housing case 37.

In order to fix the battery module 23, a heat-shrinkable tape may be used in place of the adhesive tape 22. In this case, the battery module is bound by placing the protective sheets on the both sides of the battery module, revolving the heat-shrinkable tape, and thermally shrinking the heat-shrinkable tape.

In FIGS. 11 and 12, the structure in which the unit cells 21 are connected to each other in series is shown. In order to increase the battery capacity, the unit cells may be connected to each other in parallel. Furthermore, the assembled battery packs can be connected to each other in series and/or in parallel.

Further, the aspect of the battery pack according to the third embodiment is appropriately changed according to its application. A preferable application of the battery pack according to the third embodiment is an application that requires excellent cycle characteristics at a high current. Examples of a specific application thereof include battery packs for power sources of digital cameras, and battery packs to be mounted in vehicles such as hybrid electric cars with two wheels or four wheels, electric cars with two wheels or four wheels, and assist bicycles. In particular, the battery pack according to the third embodiment is preferably used to be mounted in a vehicle.

Since the battery pack according to the third embodiment includes the nonaqueous electrolyte battery according to the second embodiment, it can exhibit a high capacity, and exhibit excellent life characteristics and safety.

### EXAMPLES

Examples will be described below, but the present invention is not restricted to Examples described below so long as not going beyond the gist of the invention.

### (Example 1)

In Example 1, an electrode of Example 1 was produced in the following procedure.

### <Preparation of Monoclinic Niobium-Titanium Composite Oxide>

First, the monoclinic niobium-titanium composite oxide was prepared in the following procedure.

As starting materials, a powder of titanium dioxide TiO₂ having an anatase-type crystal structure and a powder of a niobium pentoxide Nb₂O₅ were provided. These powders were mixed, to prepare a mixture. The obtained mixture was sintered at a temperature of 1100°C for 24 hours.

When the sintered product obtained as above was subjected to the ICP analysis, it was found that the obtained sintered product was a powder of a monoclinic niobium-titanium composite oxide having a composition formula TiNb₂O₇ (hereinafter referred to as "NTO" according to circumstances).

### <Formation of First Electrode Mixture Layer>

The powder of the niobium-titanium composite oxide obtained as above, a vapor-grown carbon fiber as a conductive agent, and polyvinylidene fluoride (PVdF) as a binder were added to N-methylpyrrolidone (NMP) as a solvent, to obtain a mixture. Added amounts were adjusted so as to set a mass ratio of the monoclinic niobium-titanium composite oxide, the vapor-grown carbon fiber and polyvinylidene fluoride to 100 : 10 : 10. The mixture thus obtained was stirred, to prepare a first slurry. This slurry was applied to each surface of a current collector made of aluminum foil having a thickness of 12 µm, and dried. Thus, a first electrode mixture layer was obtained.

### <Formation of Second Electrode Mixture Layer>

Next, a powder of lithium titanate Li₄Ti₅O₁₂ (hereinafter referred to as "LTO" according to circumstances) with the spinel structure was provided. This powder of lithium titanate and polyvinylidene fluoride (PVdF) as a binder were added to N-methylpyrrolidone (NMP) as a solvent, to obtain a mixture. Added amounts were adjusted so as to set a mass ratio of the powder of lithium titanate and PVdF to 100 : 20. The mixture thus obtained was stirred, to prepare a second slurry. This second slurry was applied onto the first electrode mixture layer by the spray drying method, and dried. Thus, a second electrode mixture layer was obtained.

### <Completion of Electrode>

Next, the surface of the second electrode mixture layer was pressed toward the current collector, thereby to obtain an electrode of Example 1 in which the electrode mixture layer has a density of 2.8 g/cm³. Table 1 shows a film thickness ratio (T₂/T₁) of the electrode layers, which is a ratio of a thickness (T₂) of the second electrode mixture layer to a thickness (T₁) of the first electrode mixture layer.

### (Comparative Example 1)

In Comparative Example 1, in a similar procedure to that in Example 1 except that the second electrode mixture layer was not formed, an electrode of Comparative Example 1 was obtained.

### (Comparative Example 2)

In Comparative Example 2, an electrode of Comparative Example 2 was obtained in the following procedure.

First, a second slurry was prepared in a similar procedure to that in Example 1. This slurry was applied onto each surface of a current collector made of aluminum foil having a thickness of 12 µm, and dried. Thus, an LTO-containing layer was obtained.

This LTO-containing layer was pressed in a similar manner to in Example 1, to obtain an electrode of Comparative Example 2 which has an electrode density of 2.8 g/cm³.

### (Comparative Example 3)

In Comparative Example 3, an electrode of Comparative Example 3 was obtained in the following procedure.

First, a second slurry was prepared in a similar procedure to that in Example 1. This slurry was applied onto each surface of a current collector made of aluminum foil having a thickness of 12 µm, and dried. Thus, an LTO-containing layer was obtained.

Next, a powder of a monoclinic niobium-titanium composite oxide was prepared in a similar procedure to that in Example 1. This powder of the niobium-titanium composite oxide, graphite as a conductive agent, and styrene-butadiene rubber (SBR) as a binder were added to water as a solvent, to obtain a mixture. Added amounts were adjusted so as to set a mass ratio of the monoclinic niobium-titanium composite oxide, graphite and styrene-butadiene rubber to 100 : 15 : 2. The mixture thus obtained was stirred, to prepare a third slurry.

This third slurry was applied to the LTO-containing layer previously formed, and dried. Thus, an NTO-containing layer was obtained.

Next, the surface of the surface of the NTO-containing layer was pressed toward the current collector, thereby to obtain an electrode of Comparative Example 3 which has an electrode density of 2.8 g/cm³. Table 1 shows a film thickness ratio (T₂/T₁) of the electrode layers, which is a ratio of a thickness (T₂) of the second electrode mixture layer to a thickness (T₁) of the first electrode mixture layer.

### (Example 2)

In Example 2, an electrode of Example 2 was obtained in the following procedure.

First, the monoclinic niobium-titanium composite oxide was prepared in the following procedure.

As starting materials, a powder of titanium dioxide TiO₂ having an anatase-type crystal structure, a powder of a niobium pentoxide Nb₂O₅, and a powder of iron trioxide Fe₂O₃ were provided. These powders were mixed, to prepare a mixture. The obtained mixture was sintered at a temperature of 1100°C for 24 hours.

When the sintered product obtained as above was subjected to the ICP analysis, it was found that the obtained sintered product was a powder of a monoclinic niobium-titanium composite oxide having a composition formula Ti_{0.9}Nb_{2.05}Fe_{0.05}O₇ and containing iron.

The powder of the niobium-titanium composite oxide containing iron, obtained as above, a vapor-grown carbon fiber as a conductive agent, and polyvinylidene fluoride (PVdF) as a binder were added to N-methylpyrrolidone (NMP) as a solvent, to obtain a mixture. Added amounts were adjusted so as to set a mass ratio of the monoclinic niobium-titanium composite oxide containing iron, the vapor-grown carbon fiber and polyvinylidene fluoride to 100 : 10 : 10. The mixture thus obtained was stirred, to prepare a first slurry. This slurry was applied to each surface of a current collector made of aluminum foil having a thickness of 12 µm, and dried. Thus, a first electrode mixture layer was obtained.

Next, a second slurry was prepared in a similar procedure to that in Example 1. This slurry was applied onto the first electrode mixture layer by the spray drying method, and dried. Thus, a second electrode mixture layer was obtained.

Next, the surface of the second electrode mixture layer was pressed toward the current collector, thereby to obtain an electrode of Example 2 which has an electrode density of 2.8 g/cm³. Table 1 shows a film thickness ratio (T₂/T₁) of the electrode layers, which is a ratio of a thickness (T₂) of the second electrode mixture layer to a thickness (T₁) of the first electrode mixture layer.

### (Example 3)

In Example 3, an electrode of Example 3 was obtained in the following procedure.

First, the monoclinic niobium-titanium composite oxide was prepared in the following procedure.

As starting materials, a powder of titanium dioxide TiO₂ having an anatase-type crystal structure, a powder of a niobium pentoxide Nb₂O₅, and a powder of molybdenum dioxide MoO₂ were provided. These powders were mixed, to prepare a mixture. The obtained mixture was sintered at a temperature of 1100°C for 24 hours.

When the sintered product obtained as above was subjected to the ICP analysis, it was found that the obtained sintered product was a powder of a monoclinic niobium-titanium composite oxide having a composition formula Ti_{1.05}Nb_{1.9}Mo_{0.05}O₇ and containing molybdenum.

The powder of the niobium-titanium composite oxide containing molybdenum, obtained as above, a vapor-grown carbon fiber as a conductive agent, and polyvinylidene fluoride (PVdF) as a binder were added to N-methylpyrrolidone (NMP) as a solvent, to obtain a mixture. Added amounts were adjusted so as to set a mass ratio of the monoclinic niobium-titanium composite oxide containing iron, the vapor-grown carbon fiber and polyvinylidene fluoride to 100 : 10 : 10. The mixture thus obtained was stirred, to prepare a first slurry. This slurry was applied to each surface of a current collector made of aluminum foil having a thickness of 12 µm, and dried. Thus, a first electrode mixture layer was obtained.

Next, a second slurry was prepared in a similar procedure to that in Example 1. This slurry was applied onto the first electrode mixture layer by the spray drying method, and dried. Thus, a second electrode mixture layer was obtained.

Next, the surface of the second electrode mixture layer was pressed toward the current collector, thereby to obtain an electrode of Example 3 which has an electrode density of 2.8 g/cm³. Table 1 shows a film thickness ratio (T₂/T₁) of the electrode layers, which is a ratio of a thickness (T₂) of the second electrode mixture layer to a thickness (T₁) of the first electrode mixture layer.

### (Comparative Example 4)

In Comparative Example 4, an electrode of Comparative Example 4 was obtained in the following procedure.

First, a powder of a monoclinic niobium-titanium composite oxide was prepared in a similar procedure to that in Example 1. This powder, a powder of lithium titanate with the spinel-type structure, a vapor-grown carbon fiber as a conductive agent, and PVdF as a binder were added to N-methylpyrrolidone (NMP) as a solvent, to obtain a mixture. Added amounts were adjusted so as to set a mass ratio of the monoclinic niobium-titanium composite oxide, lithium titanate having the spinel-type structure, the vapor-grown carbon fiber and PVdF to 90 : 10 : 10 : 10. The mixture thus obtained was stirred, to prepare a fourth slurry. This slurry was applied to each surface of a current collector made of aluminum foil having a thickness of 12 µm, and dried. Thus, a third electrode mixture layer was obtained.

Next, the surface of the third electrode mixture layer was pressed toward the current collector, thereby to obtain an electrode of Comparative Example 4 which has an electrode density of 2.8 g/cm³.

### (Comparative Example 5)

In Comparative Example 5, an electrode of Comparative Example 5 was obtained in a similar manner to Comparative Example 4 except that, at the time of preparing a fourth slurry, an adjustment was made so as to set a mass ratio of the monoclinic niobium-titanium composite oxide, lithium titanate having the spinel-type structure, the vapor-grown carbon fiber and PVdF to 50 : 50 : 10 : 10.

### (Comparative Example 6)

In Comparative Example 6, an electrode of Comparative Example 6 was obtained in a similar manner to Comparative Example 4 except that, at the time of preparing a fourth slurry, an adjustment was made so as to set a mass ratio of the monoclinic niobium-titanium composite oxide, the lithium titanate having the spinel-type structure, the vapor-grown carbon fiber and PVdF to 10 : 90 : 10 : 10.

### (Examples 4 to 7)

In Examples 4 to 7, electrodes of Examples 4 to 7 were respectively obtained in the following procedure.

First, a first slurry containing a powder of a monoclinic niobium-titanium composite oxide similar to that in Example 1 was used. This slurry was applied to each surface of a current collector made of aluminum foil having a thickness of 12 µm, and dried. Thus, a first electrode mixture layer was obtained. Next, a second slurry containing a powder of lithium titanate similar to that in Example 1 was used. This second slurry was applied onto the first electrode mixture layer with a bench-top coater, and dried. Thus, a second electrode mixture layer was obtained.

Next, the surface of the second electrode mixture layer was pressed toward the current collector, thereby to obtain an electrode of each of Examples 4 to 7 in which the electrode mixture layer has a density of 2.8 g/cm³. Table 1 shows a film thickness ratio (T₂/T₁) of the electrode layers, which is a ratio of a thickness (T₂) of the second electrode mixture layer to a thickness (T₁) of the first electrode mixture layer for each Example.

### <Production of Beaker Cell>

Beaker cells of Examples 1 to 7 and Comparative Examples 1 to 5 were produced in the following procedure by use of the respective electrodes of Examples 1 to 7 and Comparative Examples 1 to 5.

### <Preparing of Liquid Nonaqueous Electrolyte>

Ethylene carbonate (EC) and diethyl carbonate (DEC) were mixed at a volume ratio of 1 : 2, to obtain a mixed solvent. LiPF₆, which was an electrolyte, was dissolved into this mixed solvent at a concentration of 1 M, to obtain a liquid nonaqueous electrolyte.

### <Production of Beaker Cell>

A beaker cell was assembled using the electrode produced in Example 1 as a working electrode, and lithium metals as a counter electrode and a reference electrode, and the liquid nonaqueous electrolyte described above was injected thereinto, to complete a beaker cell of Example 1.

In similar procedures as above, beaker cells of Examples 2 to 7 and Comparative Examples 1 to 5 were respectively produced.

### (Evaluation of Battery Performance)

Battery performance of each of the beaker cells of Examples 1 to 7 and Comparative Examples 1 to 5 was evaluated in the following procedure.

First, the beaker cells to be evaluated were subjected to constant-current and constant-voltage charge (lithium insertion) at 1 C and 1 V for 3 hours in an environment of 45°C. Subsequently, the beaker cells to be evaluated were subjected to constant-current discharge (lithium extract) at 1 C. This discharge was performed until a battery voltage reached 3 V. A set of the charge and the discharge were taken as one charge-and-discharge cycle, and the charge-and-discharge cycle was performed 50 times.

A capacity after 50 cycles with respect to an initial capacity was calculated as a capacity retention ratio (%). The results are shown in Tables 1 to 3. Further, Table 1 below also shows compositions and production methods of the first and second electrode mixture layers and a film thickness of the electrode mixture layers in each of Examples and Comparative Examples.

**[Table 1]**

| | First Electrode Mixture Layer (current collector side) | | Second Electrode Mixture Layer (surface side) | | Film Thickness Ratio of Electrode Layers T₂/T₁ | Initial Capacity [mAh/g] | Capacity Retention Ratio [%] |
|---|---|---|---|---|---|---|---|
| | Composition of Active Material | Producing Method | Composition of Active Material | Producing Method | | | |
| Example 1 | NTO in Organic Solvent | Coating | LTO in Organic Solvent | Coating | 0.12 | 267 | 88 |
| Comparative Example 1 | NTO in Organic Solvent | Coating | - | | - | 262 | 83 |
| Comparative Example 2 | LTO in Organic Solvent | Coating | - | | - | 167 | 98 |
| Comparative Example 3 | LTO in Organic Solvent | Coating | NTO in Water | Coating | 0.5 | 198 | 49 |
| Example 2 | Iron-substituted NTO in Organic Solvent | Coating | LTO in Organic Solvent | Coating | 1.3 | 196 | 89 |
| Example 3 | Molybdenum-substituted NTO in Organic Solvent | Coating | LTO in Organic Solvent | Coating | 1.3 | 194 | 90 |

**[Table 2]**

| | Active Material A | Active Material B | Producing method | Initial Capacity [mAh/g] | Capacity Retention Ratio [%] |
|---|---|---|---|---|---|
| Comparative Example 4 | NTO 90 weight% | LTO 10 weight% | Coating | 256 | 85 |
| Comparative Example 5 | NTO 50 weight% | LTO 50 weight% | Coating | 213 | 88 |
| Comparative Example 6 | NTO 10 weight% | LTO 90 weight% | Coating | 170 | 97 |

**[Table 3]**

| | First Electrode Mixture Layer (current collector side) | | Second Electrode Mixture Layer (surface side) | | Film Thickness' Ratio of Electrode layers T₂/T₁ | Initial Capacity [mAh/g] | Capacity Retention Ratio 1 P61 |
|---|---|---|---|---|---|---|---|
| | Composition of Active Material | Producin g Method | Composition of Active Material | Producing Method | | | |
| Example 4 | NTO in Organic Solvent | Coating | LTO | Coating | 2 | 200 | 95 |
| Example 5 | NTO in Organic Solvent | Coating | LTO | Coating | 1 | 217 | 93 |
| Example 6 | NTO in Organic Solvent | Coating | LTO | Coating | 0.2 | 252 | 90 |
| Example 7 | NTO in Organic Solvent | Coating | LTO | Coating | 0.01 | 265 | 87 |

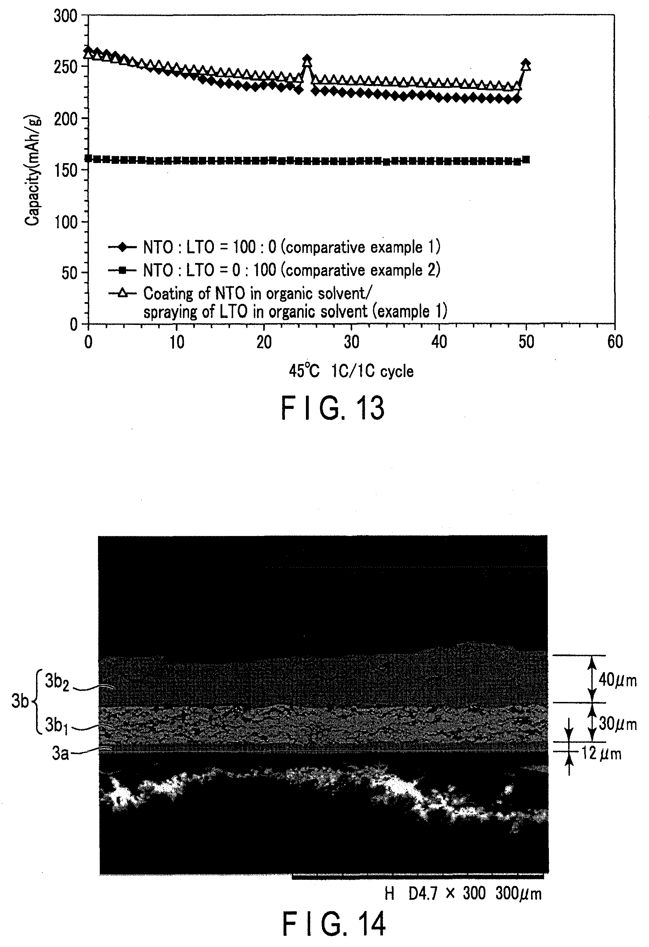

FIG. 13 shows battery characteristics of Example 1, Comparative Example 1 and Comparative Example 2. It is found from FIG. 13 and Table 1 that Example 1 was able to exhibit a higher capacity than Comparative Example 2. Further, it is found from FIG. 13 and Table 1 that Example 1 was able to exhibit a more excellent capacity retention ratio than Comparative Example 1.

It is found from Table 1 that Examples 2 and 3 are more excellent in both characteristics of the initial capacity and the capacity retention ratio than Comparative Examples 1 to 3.

Further, it is found from Tables 1 and 2 that either the initial capacities or the capacity retention ration in Comparative Examples 4 to 6 are lower than those in Examples 1 to 3.

Moreover, it is found from Table 3 that Examples 4 and 5 are more excellent in both characteristics of the initial capacity and the capacity retention ratio than Comparative Examples 1 to 3 shown in Table 1, and found that the initial capacities and the capacity retention ratios are appropriately settable in accordance with the film thickness ratio of the electrode layers.

### (Cross-Sectional Analysis of Electrode)

FIG. 14 shows a sectional SEM image of the electrode of Example 2. It should be noted that FIG. 14 is an image of the electrode of Example 2 observed after the first and second electrode mixture layers formed on one surface of the current collector have been peeled off.

As shown in FIG. 14, in the electrode 3 of Example 2, the first electrode mixture layer 3b₁ having a thickness of 30 µm is formed on the current collector 3a having a thickness of 12 µm, and the second electrode mixture layer 3b₂ having a thickness of 40 µm is formed on the first electrode mixture layer 3b₁. As apparent from FIG. 14, a clear boundary can be visually recognized between the first electrode mixture layer 3b₁ and the second electrode mixture layer 3b₂.

### (Evaluation of Safety)

Nonaqueous electrolyte batteries of respective Examples were produced using the electrodes of Examples described above as negative electrodes. Further, nonaqueous electrolyte battery of Comparative Example was produced using solvent NTO as a negative electrode. A safety test was carried out on these nonaqueous electrolyte batteries. As a result, in the nonaqueous electrolyte batteries of Examples, temperature increase ratios at the time of intentionally bringing about a short circuit were smaller than those in the nonaqueous electrolyte battery of Comparative Example.

The electrode according to at least one of the embodiments and Examples described above includes the current collector, the first electrode mixture layer formed on the current collector, and the second electrode mixture layer formed on the first electrode mixture layer. The first electrode mixture layer contains the monoclinic niobium-titanium composite oxide. The second electrode mixture layer contains the lithium titanate having the spinel structure. Hence the electrode according to the first embodiment can achieve a nonaqueous electrolyte battery which can exhibit a high capacity and can be excellent in life characteristics and safety.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrode (3) comprising:
a current collector (3a);
a first electrode mixture layer (3b₁) formed on the current collector (3a) and comprising a niobium-titanium composite oxide that has a monoclinic crystal structure; and
a second electrode mixture layer (3b₂) formed on the first electrode mixture layer (3b₁) and comprising a lithium titanate having a spinel-type crystal structure.

2. The electrode according (3) to claim 1, wherein
the niobium-titanium composite oxide is a composite oxide represented by a general formula of LiₐTiM_{b}Nb₂±βO₇±o, and
in the general formula, a, b, β and σ are values within ranges of 0 ≤ a ≤ 5, 0 ≤ b ≤ 0.3, 0 ≤ β ≤ 0.3 and 0 ≤ σ≤ 0.3, respectively, and M is at least one element selected from a group consisting of Fe, V, Mo and Ta.

3. The electrode (3) according to claim 1 or 2, wherein the lithium titanate is represented by a general formula of Li₄₊ₓTi₅O₁₂, and in the general formula, x is a value within a range of -1 ≤ x ≤ 3.

4. The electrode (3) according to any one of claims 1 to 3, wherein
the first electrode mixture layer (3b₁) has a first thickness,
the second electrode mixture layer (3b₂) has a second thickness, and
a ratio of the second thickness to the first thickness is from 0.01 to 2.

5. The electrode (3) according to claim 4, wherein the ratio of the second thickness to the first thickness is from 0.1 to 1.5.

6. The electrode (3) according to any one of claims 1 to 5, wherein
the second electrode mixture layer (3b₂) comprises particles comprising the lithium titanate, and
the particles comprising the lithium titanate have an average primary particle size of 0.1 µm to 30 µm.

7. The electrode according (3) to any one of claims 1 to 6, wherein
the first electrode mixture layer (3b₁) comprises particles comprising the niobium-titanium composite oxide, and
the particles comprising the niobium-titanium composite oxide have an average primary particle diameter of 1 nm to 10 µm.

8. The electrode (3) according to any one of claims 1 to 7, wherein the second electrode mixture layer (3b₂) further comprises an anatase-type titanium oxide.

9. The electrode (3) according to any one of claims 1 to 8, wherein each of the first electrode mixture layer (3b₁) and the second electrode mixture layer (3b₂) further comprises at least one binder selected from a group consisting of polytetrafluoroethylene, polyvinylidene fluoride, styrene-butadiene rubber and polyimide.

10. The electrode (3) according to any one of claims 1 to 9, wherein
the first electrode mixture layer (3b₁) and the second electrode mixture layer (3b₂) have a density within a range of 2 g/cm³ to 3.5 g/cm³, respectively.

11. A nonaqueous electrolyte battery (10) comprising:
a positive electrode (5, 13);
the electrode according to any one of claims 1 to 10 as a negative electrode (3, 14); and
a nonaqueous electrolyte.

12. A battery pack (20) comprising the nonaqueous electrolyte battery (10) according to claim 11.
